Europäisches Patentamt

European Patent Office

Office européen des brevets

(11) Veröffentlichungsnummer: **0 053 288**
**B1**

(12) **EUROPÄISCHE PATENTSCHRIFT**

(45) Veröffentlichungstag der Patentschrift: **12.02.86**

(51) Int. Cl.⁴: **F 02 P 5/15, H 03 M 1/00**

(21) Anmeldenummer: **81109221.2**

(22) Anmeldetag: **29.10.81**

(54) Elektronischer Zündimpulsgenerator.

(30) Priorität: **01.12.80 DE 3045246**

(43) Veröffentlichungstag der Anmeldung:
**09.06.82 Patentblatt 82/23**

(45) Bekanntmachung des Hinweises auf die
Patenterteilung:
**12.02.86 Patentblatt 86/07**

(84) Benannte Vertragsstaaten:
**AT FR GB IT SE**

(56) Entgegenhaltungen:
**DE-A-2 823 214**
**DE-B-2 259 804**
**DE-C-2 339 755**
**US-A-4 009 697**

**ELECTRONIQUE & APPLICATIONS
INDUSTRIELLES, Nr. 252, Mai 1978 Paris
"Convertisseur A/D - linéariseur pour
photocellule" Seiten 61, 62**

**MICROELECTRONICS & RELIABILITY Band 21,
Nr. 3, Mai 1981 Oxford A. JENKINS "D-A and
A-D Conversion" Seiten 329 bis 341**

(73) Patentinhaber: **Atlas Fahrzeugtechnik GmbH
Eggenpfad 26
D-5980 Werdohl (DE)**

(72) Erfinder: **Brandner, Burkhard
Bornstrasse 2
D-5980 Werdohl (DE)**
Erfinder: **Blauhut, Reinhold
Eggenpfad 24
D-5980 Werdohl (DE)**
Erfinder: **Knüfelmann, Manfred
Hörder Strasse 69
D-4000 Düsseldorf 30 (DE)**
Erfinder: **Magyary, Lászlo
Im Hahneneck 2a
D6382 Friedrichsdorf 2 (DE)**

(74) Vertreter: **Hassler, Werner, Dr.
Postfach 17 04 Asenberg 62
D-5880 Lüdenscheid (DE)**

EP 0 053 288 B1

Courier Press, Leamington Spa, England.

**Beschreibung**

Die Erfindung betrifft einen elektronischen Zündimpulsgenerator mit einem an eine Welle eines Ottomotors gekoppelten Drehwinkelimpulsgeber, dessen Drehwinkelimpulse einem Rechner zur Bestimmung des Zündzeitpunktes und zur Abgabe der Zündimpulse zugeführt werden, und mit einem aus einem Verstellgenerator und einem Drucksensor bestehenden Verstellimpulsgeber, der in Abhängigkeit vom Druck im Ansaugrohr Impulse in einem rückstellbaren $2^n$-Binärzähler zählt und dem Zählstand des Binärzählers entsprechende Verstellimpulse für den Rechner auf n Einzelleitern einer Sammelleitung bereithält, die im Sinne einer leistungsabhängigen Verstellung des Zünderzeitpunktes wirksam sind.

Ein derartiger Zündimpulsgenerator ist in der DE—C—2 339 755 oder der äquvalenten US—A—3 941 103 beschrieben. Der Zündzeitpunkt wird mittels eines Rechners drehzahlabhängig und in Abhängigkeit von anderen Parametern wie dem Druck im Ansaugrohr verstellt. Dabei wird mit Hilfe des im Ansaugrohr gemessenen Druckes ein zusätzlicher Funktionsgenerator mit Frequenzgenerator gesteuert, der Zusatzimpulse liefert. Die gegenseitige Konstanthaltung verschiedener Impulsgeneratoren, insbesondere die Beherrschung von Temperatureschwankungen, und die Abgleichung der Taktfrequenzen bereitet in der Praxis große Schwierigkeiten.

Ein Zündimpulsgenerator der eingangs genannten Art ist aus der US—A—4 009 697 bekannt. Dort wird der Druckwert in ein Codesignal umgeformt und kennfeldabhängig in einen Zählwert umgewandelt. Dieser druckbezogene Zählwert mit einem dem Kurbelwellenwinkel entsprechenden Zählwert verglichen. Die Übereinstimmung beider Zählwerte führt zur Auslösung des Zündimpulses.

Aufgabe der Erfindung ist eine solche Ausbildung eines Zündimpulsgenerators der genannten Art, daß zur Erzeugung der Verstellimpulse auch die Drehwinkelimpulse benutzt werden können. Außerdem soll eine sehr genaue Erfassung des Unterdrucks gewährleistet sein.

Diese Aufgabe wird nach der Erfindung durch die Kombination folgender Merkmale des Verstellimpulsgebers gelöst:

a) an die Sammelleitung ist ferner ein D/A-Wandler angeschlossen, dessen Ausgangsleitung zu dem ersten Eingang eines Spannungsvergleichers geführt ist;

b) der den Druck im Ansaugrohr messende Drucksensor ist mit dem zweiten Eingang des Spannungsvergleichers verbunden;

c) die vom Drehwinkelimpulsgeber (2) abgegebenen Drehwinkelimpulse werden über eine Leitung dem Zähleingang (C) des Binärzählers zugeführt;

d) der Setzausgang einer bistabilen Kippschaltung ist mit dem Sperreingang des Binärzählers verbunden, an den Setzeingang der bistabilen Kippschaltung ist eine Zyklussignalleitung des Drehwinkelimpulsgebers und an den Rücksetzeingang sind der Überlaufausgang des Binärzählers und der Ausgang des Spannungsvergleichers angeschlossen.

Die Erfindung unterscheidet sich dadurch von Stand der Technik, daß die Drehwinkelimpulse so lange in dem Binärzähler gezählt werden, bis der Ausgangszählwert dem Meßwert des Drucksensors entspricht. Bei diesem Zählstand wird der Binärzähler angehalten. Der jeweils erreichte Zählstand des Binärzählers stellt die Anzahl der Verstellimpulse dar. Der Binärzähler als Teil des Verstellgenerators ist somit zusammen mit dem Drucksensor als Verstellimpulsgeber wirksam. Diese Ausbildung erlaubt eine sehr genaue Erfassung des Unterdrucks. Die auf der Sammelleitung bereitstehenden Datenwerte der Verstellimpulse können vom dem Rechner taktgesteuert abgerufen werden.

In Weiterbildung der Erfindung ist vorgesehen, daß der Drucksensor ein piezoelektrischer Drucksensor ist. Damit ist eine noch genauere Erfassung des Unterdrucks möglich.

Damit im Ansaugrohr auch ein Überdruck erfaßt werden kann und damit auch für einen Motor mit Turbolader eine leistungsabhängige Verstellung der Zünderkennlinie möglich ist, sieht die Erfindung vor, daß die Ausgangsspannung des Drucksensors an einem ersten Eingang sowie eine Bezugsspannung an einem zweiten Eingang eines weiteren Spannungsvergleichers anliegen.

Weiter sieht ein Ausführungsform der Erfindung vor, daß ein Spannungsteiler zur Bereitstellung der Bezugsspannung vorgesehen ist. Dadurch läßt sich die Bezugsspannung jeweils auf den erforderlichen Betriebswert einstellen.

In Weiterbildung der Erfindung ist vorgesehen, daß die Vorwahleingänge des Binärzählers auf den Vorwahlwert "1" eingestellt sind. Die Verstellimpulse werden dann ausgehend von diesem Vorwahlwert "1" gezählt. Maximal sind $2^n$ Verstellimpulse möglich.

Damit die Rückstellung des Binärzählers phasenrichtig zu den Drehwinkelimpulsen erfolgt, ist vorgesehen, daß die Zyklussignalleitung über einen Inverter an einem Rückstelleingang des Binärzählers anliegt.

Schließlich sieht eine weitere Ausführungsform der Erfindung vor, daß ein Drosselklappenschalter mit einem Hauptrückstelleingang des Binärzählers verbunden ist, so daß der Binärzähler bei geschlossener Drosselklappe dauernd den Zählstand "0" anzeigt. Damit ist gewährleistet, daß im Schiebebetrieb keine Verstellimpulse erzeugt werden. Im Schiebebetrieb gibt der Verstellimpulsgeber vielmehr den Zählstand "0" ab, der im Rechner in entsprechender Weise ausgewertet werden kann.

Eine Ausführungsform der Erfindung wird im folgenden unter Bezugnahme auf die anliegenden Zeichnungen erläutert, in denen darstellen:

Fig. 1 eine Gesamtansicht eines Zündimpulsgenerators an einem Ottomotor in einer Blockdarstellung und

Fig. 2 ein schematisches Schaltbild des Verstellimpulsgebers.

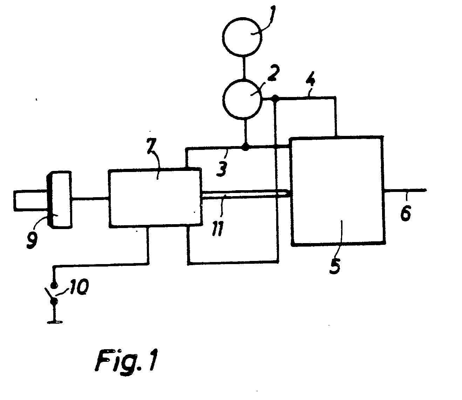

Fig. 1 zeigt einen Ottomotor 1, an den ein Drehwinkelimpulsgeber 2 angekoppelt ist. Der Drehwinkelimpulsgeber 2 ist z.B. an die Schwungscheibe der Kurbelwelle gekoppelt und fühlt Markierungen der Schwungscheibe ab. Der Drehwinkelimpulsgeber 2 gibt auf der Leitung 3 Drehwinkelimpulse ab. Über ein zusätzliche Zyklussignalleitung 4 wird ein Zyklussignal abgegeben, auf das die Phasenlage bezogen ist. Die Zyklussignalleitung 4 und die Leitung 3 führen zu einem Rechner 5, der den Zündzeitpunkt errechnet und auf der Leitung 6 einen Zündimpuls abgibt.

Ferner ist ein Verstellimpulsgenerator 7 vorgesehen, der als wesentliches Bauelement einen $2^n$-Binärzähler 8 umfaßt. Der Binärzähler 8 hat in dem dargestellten Beispiel eine Zählkapazität "16", so daß n=4 ist. Der Verstellimpulsgenerator 7 arbeitet in Abhängigkeit von einem Drucksensor 9 sowie einem Drosselklappenschalter 10. Die Drehwinkelimpulse werden über die Leitung 3 auch in den Verstellimpulsgeber eingegeben und in dem Binärzähler 8 in der noch zu beschreibenden Weise gezählt. Der jeweilige Zählstand des Binärzählers 8 wird über eine Sammelleitung 11 zu dem Rechner 5 weitergegeben.

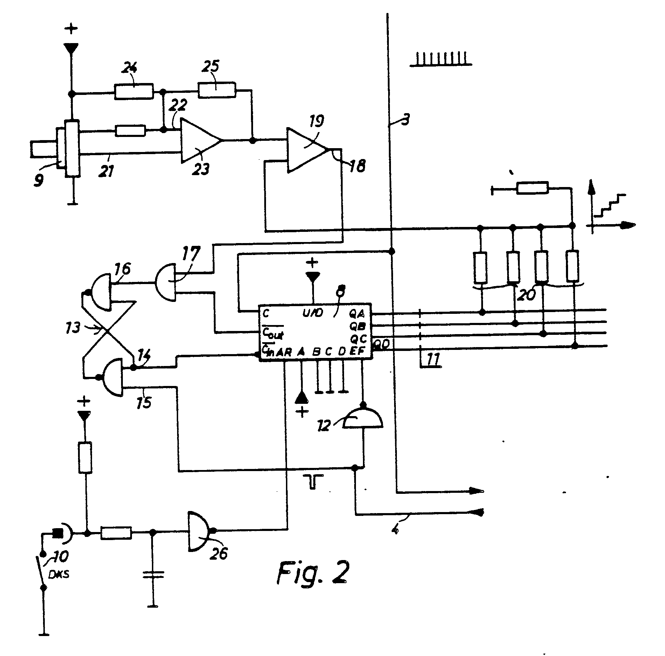

Einzelheiten des Verstellimpulsgenerators 7 sind in Fig. 2 dargestellt.

Der $2^n$-Binärzähler 8 besitzt Zählausgänge QA, QB, QC und QD, an die die vier Einzelleiter der Sammelleitung 11 angeschlossen sind. Diese Einzelleiter der Sammelleitung 11 führen jeweils Spannungswerte, die den einzelnen Binärwerten entsprechen, so daß 16 Binärzustände dargestellt werden können. Außerdem sind vier Vorwahleingänge A, B, C, D vorhanden, von denen der Eingang A mit einer Bezugsspannung verbunden und die anderen Eingänge geerdet sind. Dieses bedeutet einen Vorwahlwert "1". Ein Rückstelleingang EF stellt aufgrund eines Eingangsimpulses den Zählstand des Binärzählers 8 aud den Vorwahlwert. Außerdem ist ein Hauptrückstelleingang AR vorhanden, der den Zählstand des Binärzählers 8 auf den Wert 0 unabhängig von der Einstellung der Vorwahleingänge einstellt. Ferner sind ein Sperreingang $\overline{C_{in}}$, an dem der Eintritt von Zählimpulsen gesperrt wird, ein Anschluß C als Zähleingang und ein Überlaufausgang $\overline{C_{out}}$ vorhanden. An dem Zähleingang C ist die Leitung 3 angeschlossen, die die Drehwinkelimpulse führt. Die Zyklussignalleitung 4 ist über einen Inverter 12 mit dem Rückstelleingang EF des Binärzählers 8 verbunden. Der Setzausgang 14 einer bistabilen (RS) Kippschaltung 13 ist mit dem Sperreingang $\overline{C_{in}}$ des Binärzählers 8 verbunden, wobei der invertierte Signalwert anliegt. Der Setzeingang 15 der bistabilen (RS) Kippschaltung 13 ist an die Zyklussignalleitung 4 angekoppelt. Der Rücksetzeingang 16 der bistablen (RS) Kippschaltung 13 ist über eine Und-Schaltung 17 einerseits an den Überlaufausgang $\overline{C_{out}}$ des Binärzählers 8 angeschlossen und andererseits mit dem Ausgang 18 eines Spannungsvergleichers 19 verbunden.

An einem Eingang des Spannungsvergleichers 19 liegt der in einem D/A-Wandler 20 in einen Analogwert umgewandelte Zählstand gemäß den Signalwerten der Sammelleitung 11 an. An dem anderen Eingang des Spannungsvergleichers 19 liegt das Ausgangssignal des Drucksensors 9 an, der ein piezoelektrischer Drucksensor ist. Daus auf der Leitung 21 erscheinende Ausgangssignal der Drucksensors 9 wird zunächst mit einer Bezugsspannung an einem Eingang 22 eines weiteren Spannungsvergleichers 23 verglichen. Die Bezugsspannung für den Eingang 22 wird durch die Spannungsteilerwiderstände 24 und 25 voreingestellt. Das Ausgangssignal dieses Spannungsvergleichers 23 liegt an dem Spannungsvergleicher 19 an. Durch entsprechende Einstellung des Bezugsdruckes ist auch eine Überdruckmessung im Aufladebetrieb möglich.

Ein Drosselklappenschalter 10 legt in der dargestellten Weise die Eingangsspannung eines Inverters 26 fest. Bei geöffnetem Drosselklappenschalter 10 liegt am Eingang des Inverters 26 eine Signalspannung, bei geschlossenem Drosselklappenschalter die Spannung 0. Der Ausgang des Inverters 26 liegt an dem Hauptrückstelleingang AR des Binärzählers 8.

Der von dem Drucksensor 9 gemessene Spannungswert steht an einem Eingang des Spannungsvergleichers 19 ständig zur Verfügung. Während einer jeden Umdrehung der Kurbelwelle des Ottomotors werden auf der Zyklussignalleitung 4 ein Zyklussignal zur Festlegung der Bezugsphasenlage sowie eine Drehwinkelimpulsfolge auf der Leitung 3 erzeugt. Das Zyklussignal stellt einerseits über den Inverter 12 den Binärzähler 8 auf den Vorwahlwert "1" und schaltet andererseits die bistabile (RS) Kippschaltung 13 in ihren Einschaltzustand, so daß dadurch am Sperreingang $\overline{C_{in}}$ des Binärzählers 8 der Spannungswert "0" erscheint. Damit ist der Binärzähler 8 bereitgestellt, so daß die Drehwinkelimpulse auf der Leitung 3 über den Zähleingang C den Binärzähler 8 beaufschlagen und gezählt werden. Entsprechend diesen Drehwinkelimpulsen verändert sich der Zählstand der Ausgänge QA, QB, QC und QD. Diese auf der Sammelleitung 11 erscheinenden Zählstände werden in den D/A-Wandler 20 in eine Analogspannung umgewandelt, die in den Spannungsvergleicher 19 mit dem Spannungswert des Drucksensors verglichen wird. Die Zählung der Drehwinkelimpulse dauert so lange an, wie die dem Zählstand entsprechende Analogspannung kleiner als die dem Druckwert entsprechende Analogspannung ist. Sobald die dem Druckwert im Ansaugrohr entsprechende Analogspannung kleiner als die dem Zählstand entsprechende Analogspannung wird, erreicht der Signalpegel am Ausgang 18 den Wert "0". Dadurch wird über den Rücksetzeingang 16 die bistabile (RS) Kippschaltung 13 zurückgestellt, so daß der Binärzähler 8 am Sperreingang $\overline{C_{in}}$ gesperrt wird. Der erreichte Zählstand des Binärzählers bleibt während des jeweiligen Zyklus unverändert bestehend und steht auf der Sammelleitung 11 zum Abruf durch den Rechner zur Verfügung.

Wenn die dem Druckwert entsprechende Spannung am Spannungsvergleicher 19 größer als die den Zählstand $2^n-1$ des Binärzähler entsprechende Spannung ist, wird der Spannungspegel am Ausgang 18 den Wert "0" nicht erreichen. Jedoch erscheint am Überlaufausgang $\overline{C_{out}}$ ein Signalwert, sobald der maximale Zählstand des Binärzählers 8 erreicht ist. Dieser schaltet über den Rücksetzeingang 16 die bistabile (RS) Kippschaltung 13 ebenfalls um, so daß der Binärzähler 8 auf dem maximalen Zählstand angehalten wird. Infolgedessen steht dieser maximale Zählstand über die Sammelleitung 11 bereit.

Bei geöffnetem Drosselklappenschalter 10 liegt an den AR-Eingang des Binärzählers 8 ein "0"-Signalpegel an, so daß die Funktion des Binärzählers 8 der vorigen Beschreibung entspricht. Wenn jedoch der Drosselklappenschalter 10 geschlossen ist, was einem Schiebebetrieb des Motors entspricht, erscheint ein Signalwert am Eingang AR des Binärzählers 8, so daß der Ausgang des Binärzählers 8 ständig den Zählstand "0" anzeigt. Dieser Zählstand "0" auf der Sammelleitung 11 wird im Rechner als Signal für den Schiebetrieb erfaßt.

Die Zählstände des Binärzählers können vom Rechner als zusätzliche Zählimpulse eingelesen werden. Es ist auch möglich entsprechend den Zählständen Adressen des Rechner oder Unter-. programme abzurufen. Dadurch ist eine leistungsabhängige Änderung der Zündkennlinie möglich. Die Zündkennlinie kann den jeweiligen Betriebsverhältnissen bestens angepaßt werden. Der Zünderimpulsgenerator nach der Erfindung ermöglicht nicht nur die Erfassung eines Unterdrucks, sondern auch eines Überdrucks im Aufladebretrieb.

## Patentansprüche

1. Elektronischer Zündimpulsgenerator mit einem an eine Welle eines Ottomotors (1) gekoppelten Drehwinkelimpulsgeber (2), dessen Drehwinkelimpulse einem Rechner (5) zur Bestimmung des Zündzeitpunktes und zur Abgabe der Zündimpulse zugeführt werden, und mit einem aus einem Verstellimpulse generator (7) und einem Drucksensor (9) bestehenden Verstellimpulsgeber, der in Abhängigkeit vom Druck im Ansaugrohr Impulse in einem rückstellbaren $2^n$-Binärzähler (8) zählt und dem Zählstand des Binärzahlers entsprechende Verstellimpulse für den Rechner (5) auf n Einzelleitern einer Sammelleitung (11) bereithält, die im Sinne einer leistungsabhängig Verstellung des Zündzeitpunktes wirksam sind, gekennzeichnet durch die Kombination folgender Merkmale des Verstellimpulsgebers (7, 9):

a) an die Sammelleitung (11) ist ferner ein D/A-Wandler (20) angeschlossen, dessen Ausgangsleitung zu dem ersten Eingang eines Spannungsvergleichers (19) geführt ist;

b) der den Druck im Ansaugrohr messende Drucksensor (9) ist mit dem zweiten Eingang des Spannungsvergleichers (19) verbunden;

c) die rom Drehwinkelimpulsgeber (2) abgegeben Drehwinkelimpulse werden über eine Leifung (3) dem Zähleingang (C) des Binärzühlers (8) zugeführt;

d) der Setzausgang (14) einer bistabilen Kippschaltung (13) ist mit dem Sperreingang $(\overline{C_{in}})$ des Binärzählers (8) verbunden, an den Setzeingang (15) der bistabilen Kippschaltung (13) ist eine Zyklussignalleitung (4) des Drehwinkelimpulsgebers (2) und an den Rücksetzeingang (16) sind der Überlaufausgang $(\overline{C_{out}})$ des Binärzählers (8) und der Ausgang (18) des Spannungsvergleichers (19) angeschlossen.

2. Elektronischer Zündimpulsgenerator nach Anspruch 1, dadurch gekennzeichnet, daß der Drucksensor (9) ein piezoelektrischer Drucksensor ist.

3. Elektronischer Zündimpulsgenerator nach Anspruch 2, dadurch gekennzeichnet, daß die Ausgangsspannung des Drucksensors (9) an einem ersten Eingang (21) sowie eine .Bezugsspannung an einem zweiten Eingang (22) eines weiterem Spannungsvergleichers (23) anliegen.

4. Elektronischer Zündimpulsgenerator nach Anspruch 3, dadurch gekennzeichnet, daß ein Spannungsteiler (24, 25) zur Bereitstellung der Bezugsspannung vorgesehen ist.

5. Elektronischer Zündimpulsgenerator nach einem der Ansprüche 1 bis 4, dadurch gekennzeichnet, daß der Ausgang (18) des Spannungsvergleichers und der Überlaufausgang $(\overline{C_{out}})$ des Binärzählers (8) zu einer Und-Schaltung (17) geführt sind.

6. Elektronischer Zündimpulsgenerator nach einem der Ansprüche 1 bis 5, dadurch gekennzeichnet, daß die Vorwahleingänge (A, B, C, D) des Binärzählers (8) auf den Vorwahlwert "1" eingestellt sind.

7. Elektronischer Zündimpulsgenerator nach Anspruch 6, dadurch gekennzeichnet, daß die Zyklussignalleitung (4) über einen Inverter (12) an einem Rückstelleingang (EF) des Binärzählers (8) anliegt.

8. Elektronischer Zündimpulsgenerator nach einem der Ansprüche 1 bis 7, dadurch gekennzeichnet, daß ein Drosselklappenschalter (10) mit einem Hauptrückstelleingang (AR) des Binärzählers (8) verbunden ist, so daß der Binärzähler bei geschlossener Drosselklappe dauernd den Zählstand "0" anzeigt.

## Revendications

1. Générateur électronique d'impulsions d'allumage, avec un émetteur d'impulsions d'angle de rotation (2) couplé à un arbre d'un moteur à essence (1), dont les impulsions d'angle de rotation sont envoyées à un calculateur (5) pour déterminer le moment d'allumage et avec un émetteur d'impulsions de décalage constitué par un générateur d'impulsions de décalage (7) et un détecteur de pression (9), qui, en fonction de la pression dans le tube d'aspiration, compte des impulsions dans un compteur binaire $2^n$ (8) pouvant être ramené en arrière et offre des impulsions de décalage correspondant à la position de comptage du compteur binaire pour le calculateur (5) sur n conducteurs individuels d'une ligne collective (11), impulsions qui agissent dans le sens d'un décalage en fonction de la puissance du moment d'allumage, caractérisé par la combinaison des caractéristiques suivantes de l'émetteur d'impulsions de décalage (7, 9):

a) à la ligne collective (11) est en outre connecté un convertisseur numérique/analogique (20), dont la ligne de sortie est amenée à la première entrée d'un comparateur de tension (19);

b) le détecteur de pression (9) mesurant la pression dans le tube d'aspiration est relié à la seconde entrée du comparateur de tension (19);

c) les impulsions d'angle de rotation émises par l'émetteur d'impulsions d'angle de rotation (2) sont appliquées par l'intermédiaire d'une ligne (11) à l'entrée de comptage (C) du compteur binaire (8);

d) la sortie de réglage (14) d'un circuit de bascule bistable (13) est reliée à l'entré de blocage $(\overline{C_{in}})$ du compteur binaire (8), à l'entrée de réglage (15) du circuit de bascule bistable (16) est connectée une ligne de signal de cycle (4) de l'émetteur d'impulsions d'angle de rotation (2) et à l'entrée de remise à état initial (16) sont connectées la sortie de dépassement $(\overline{C_{out}})$ du compteur binaire (8) et la sortie (18) du comparateur de tension (19).

2. Générateur électronique d'impulsions d'allumage suivant la revendication 1, caractérisé en ce que le détecteur de pression (9) est un détecteur de pression piézo-électrique.

3. Générateur électronique d'impulsions d'allumage suivant la revendication 2, caractérisé en ce que la tension de sortie du détecteur de pression (9) est appliquée à une première entrée (21), ainsi qu'une tension de référence à une seconde entrée (22) d'un autre comparateur de tension (23).

4. Générateur électronique d'impulsions d'allumage suivant la revendication 3, caractérisé en ce qu'un diviseur de tension (24, 25) est prévu pour offrir la tension de référence.

5. Générateur électronique d'impulsions d'allumage suivant l'une des revendications 1 à 4, caractérisé en ce que la sortie (18) du comparateur de tension et la sortie de dépassement $(\overline{C_{out}})$ du compteur binaire (8) sont amenées à un circuit ET (17).

6. Générateur électronique d'impulsions d'allumage suivant l'une des revendications 1 à 5, caractérisé en ce que les entrées de présélection (A, B, C, D) du compteur binaire (8) sont réglées à la valeur de présélection "1".

7. Générateur électronique d'impulsions d'allumage suivant la revendication 6, caractérisé en ce que la ligne de signal de cycle (4) est ramenée par l'intermédiaire d'un inverseur (12) à une entrée de remise à état initial (EF) du compteur binaire (8).

8. Générateur électronique d'impulsions d'allumage suivant l'une des revendications 1 à 7, caractérisé en ce qu'un commutateur de clapet d'étranglement (10) est relié à une entrée de remise à état initial principale (AR) du compteur binaire (8), de telle sorte que le compteur binaire affiche en permanence la position de comptage (0) avec le clapet d'étranglement fermé.

**Claims**

1. An electronic ignition pulse generator comprising an angle-of-rotation pulser (2 coupled with a shaft of an Otto-engine (1) and generating angle-of-rotation pulses which are fed into a computer (5) determining the ignition time and producing the ignition pulses, and comprising an adjustment pulser consisting of an adjustment pulse generator (7) and a pressure sensor (9) and counting pulses in a resettable $2^n$-binary counter (8) in accordance with the engine intake pressure and presenting, according to the count of the binary counter (8), on n separate conductors of a bus adjustment pulses for the computer (5) which are effective for adjustment of the ignition time according to the output of the engine, characterized by the combination of the following features of the adjustment pulser (7, 9):

a) further a D/A converter (20) is connected to the bus (11), the output of the D/A converter is fed to the first input of a voltage comparator (19);

b) the pressure sensor (9) measuring the pressure in the engine intake duct is coupled to the second input of the voltage comparator (19);

c) the angle-of-rotation pulses produced by the angle-of-rotation pulser (2) are fed through a conductor (3) into the counter input (C) of the binary counter (8);

d) the Set-output (14) of a bistable RS flip-flop (13) is connected with the inhibiting input $(\overline{C_{in}})$ of the binary counter (8), a cycle signal conductor (4) of the angle-of-rotation pulser (2) is coupled with the Set-input (15) of the RS flip-flop (13) and the Reset-input (16) is coupled with the overflow output $(\overline{C_{out}})$ of the binary counter (8) and with the output of the voltage comparator (19).

2. An electronic ignition pulse generator as defined in claim 1, characterized in that the pressure sensor (9) is a piezoelectric pressure sensor.

3. An electronic ignition pulse generator as defined in claim 2, characterized in that the output voltage of the pressure sensor (9) is fed to a first input (21) of a further voltage comparator (23) and a reference voltage is fed to a second input (22) of said further voltage comparator (23).

4. An electronic ignition pulse generator as defined in claim 3, characterized in that a voltage divider (24, 25) is provided for the generation of said reference voltage.

5. An electronic ignition pulse generator as defined in any one of claims 1 through 4, characterized in that the exit (18) of the voltage comparator and the overflow output ($\overline{C_{out}}$) of the binary counter (8) are connected to a AND-gate (17).

6. An electronic ignition pulse generator as defined in any one of the claim 1 through 5, characterized in that the present in outs (A, B, C, D) of the binary counter (8) are adjusted for a preset value of "1".

7. An electronic ignition pulse generator as defined in claim 6, characterized in that the cycle signal conductor (4) is connected through an inverter (12) to a reset input (EF) of the binary counter (8).

8. An electronic ignition pulse generator as defined in any of the claims 1 to 7, characterized in that a throttle switch (10) is connected with the main reset input (AR) of the binary counter (8) in such a way that the binary counter is maintained at a count of "0", for as long as the throttle is closed.

**Fig.1**

Fig. 2